# EUROPEAN PATENT APPLICATION

(11) **EP 1 939 613 A1**
(43) Date of publication of application: **02.07.2008**
(21) Application number: 06811834.8
(22) Date of filing: 16.10.2006
(51) Int. Cl.: G01N 27/327

(54) **SENSOR CHIP AND METHOD FOR PRODUCING THE SAME**

(30) Priority: 17.10.2005 JP 2005301307; 26.10.2005 JP 2005311131
(71) Applicant: Sumitomo Electric Industries, Ltd., Osaka-shi, Osaka 541-0041 (JP); National Institute of Advanced Industrial Science and Technology, Tokyo 100-8921 (JP)
(72) Inventor: NAKAMURA, Hideaki, Ibaraki 305-8562 (JP); GOTOH, Masao, Ibaraki 305-8562 (JP); ISHIKAWA, Tomoko, Ibaraki 305-8562 (JP); KARUBE, Isao, Ibaraki 305-8562 (JP); HOSOYA, Toshifumi, Osaka 554-0024 (JP); KAIMORI, Shingo, Osaka 554-0024 (JP); ICHINO, Moriyasu, Osaka 554-0024 (JP)
(74) Representative: Cross, Rupert Edward Blount
(86) International application number: PCT/JP2006/320570
(87) International publication number: WO 2007/046335

(57) **Abstract**

It is intended to provide a sensor chip which has a small size and is easily produced and capable of determining quantities of at least two components of multiple samples rapidly, conveniently, and correctly as well as to provide a production method capable of producing the sensor chip easily and with high productivity.

A sensor chip includes a substrate, a cover layer, a spacer layer sandwiched between the substrate and the cover layer, multiple reaction portions disposed between the substrate and the cover layer, multiple detection units exposed in the hollow reaction portions, and a sample inlet communicated with the hollow reaction portions and a method for producing the sensor chip.

A sensor chip includes two substrates opposed to each other, a spacer layer sandwiched between the substrates, and multiple measurement units disposed between the substrates and including two or more hollow reaction portions that share one sample inlet opened on outer surfaces of the substrates and detection electrode units respectively exposed in the hollow reaction portions and a method for producing the sensor chip.

## Description

### Technical Field

This invention relates to a sensor chip, particularly, to a biosensor chip for determining a quantity of a specific component in a sample. More specifically, this invention relates to a sensor chip capable of rapidly and conveniently determining quantities of a multiple of components in a sample and a sensor chip capable of rapidly and conveniently determining quantities of at least two components of multiple samples.

### Related Art

A biosensor chip is a sensor chip that causes a biochemical reaction such as an enzyme reaction and an antigen-antibody reaction on a trace amount of a sample introduced into a reaction portion of the chip and then outputs information obtained by the biochemical reaction. Such biosensor chip utilizes a molecular discrimination function of a living body and attracts attention as a tool that enables a rapid and convenient measurement of a trace amount of a chemical substance. The biosensor chip is used as a blood sugar level sensor for measuring a glucose amount (blood sugar level) in blood or a urinary sugar level and the like for an in-home health checkup (self care) for self-managing and preventing diabetes.

As such sensor chip, there is a demand for the one having a shape and a size which are easy to use in the in-home health checkup and being capable of correct measurement as well as of obtaining as much information as possible by using a smallest amount of a sample, with a simple operation, in a short time, and, if possible, at once. Therefore, there is a demand for a sensor chip capable of causing multiple types of reactions and multiple types of quantity determinations on a trace amount of a sample introduced from one sample inlet.

Further, for the purpose of rapidly performing measurements of multiple samples and measurements of multiple components in each of multiple samples, there is a demand for a sensor chip which is usable as a biosensor chip and the like and capable of performing measurements of multiple samples and/or measurements of multiple components in each of multiple samples.

JP-A-4-264246 discloses a biosensor chip having an insulating substrate and multiple pairs of electrode units provided on the substrate as one example of the above-described sensor chip. Though this biosensor chip is capable of measuring samples of multiple components simultaneously, the biosensor chip has a problem that the size is larger than a chip for one component since this biosensor chip has a structure that reaction layers and the multiple electrode units are disposed in parallel to one another on one flat surface. Also, since it is necessary to produce and assembly component members each having a specific structure with high accuracy, there are problems of reduced productivity and high production cost.

Also, JP-A-6-109693 discloses a biosensor chip wherein a reaction layer (reaction portion), a main electrode unit, and a sub electrode unit are provided on an insulating substrate, and a hydrophilic polymer layer is provided between the electrode units. In this biosensor chip, the reaction layer is partitioned only by the hydrophilic polymer for the purpose of simplifying the structure, and mass transfer is restricted by swelling of the hydrophilic polymer. However, the biosensor chip has problems that the production cost is increased since it is necessary to dispose the hydrophilic polymer with high accuracy and accuracy is inferior to the case of providing reaction layers separately since it is difficult to perfectly prevent the mass transfer only by the hydrophilic polymer.

Also, JP-A-6-109698 discloses a biosensor having an insulating substrate, an electrode unit formed on the insulating substrate, and a reaction layer (reaction portion) formed on the insulating substrate as well as a base concentration measurement method supplying a sample liquid to the biosensor and performing operation of measuring a current value by coating a predetermined voltage to the electrode unit for multiple times. With this method, it is possible to determine quantities of multiple components by using the biosensor provided with one electrode unit and one reaction portion. However, since this method utilizes a reaction time difference between bases, there is a problem of long measurement time, and the method is usable only for a specific combination wherein the substances to be measured have a reaction time difference.

As a countermeasure for the above-described problems, there is a demand for a sensor chip which is easily produced, has a small size, and is capable of determining quantities of multiple components in each of multiple samples rapidly, conveniently, and correctly.

Patent document 1: Unexamined Japanese Patent Application Publication 1: JP-A-4-264246
Patent document 2: Unexamined Japanese Patent Application Publication 2: JP-A-6-109693
Patent document 3: Unexamined Japanese Patent Application Publication 3: JP-A-6-109698

### Disclosure of the Invention

### Problems to be solved by the Invention

An object of this invention is to provide a sensor chip which is easily produced and capable of determining quantities of multiple components in a sample rapidly, conveniently, and correctly. Also, another object of this is to provide a sensor chip which is easily produced, has a small size, and is capable of determining quantities of at least two components of multiple samples rapidly, conveniently, and correctly. Yet another object of this invention is to provide a production method capable of producing the sensor chips easily and with high productivity.

### Means for solving the Problems

The inventor of this invention has conducted an extensive research to find that it is possible to obtain a sensor chip capable of rapidly, conveniently, and correctly determining a multiple of components in a trace amount of a sample by disposing multiple measurement units each having a hollow reaction portion and a detection unit exposed in the hollow reaction portion between two substrates and providing communication between the multiple measurement units and a sample inlet.

Further, the inventor found that it is possible to produce the sensor chip having the above-described excellent characteristics easily and with high productivity by a method of forming multiple detection units on a sheet of a resin film or the like; forming a spacer layer having multiple grooves for exposing the detection units on the sheet; and covering the spacer layer with another sheet. This invention is accomplished based on the above findings.

According to this invention, there is provided a sensor chip including a substrate, a cover layer, a spacer layer sandwiched between the substrate and the cover layer, multiple hollow reaction portions disposed between the substrate and the cover layer, multiple detection units exposed in the hollow reaction portions, wherein a sample inlet is communicated with the hollow reaction portions (claim 1).

It is preferable that the substrate and the cover layer are formed from an identical material and have an identical thickness, so that it is possible to prevent problems such as warping during and after production of sensor chips as well as to produce the sensor chips by a method achieving high productivity as described later in this specification. Claim 2 corresponds to this preferred mode.

Further, it is preferable to dispose the multiple hollow reaction portions communicated with the sample inlet to extend radially from the sample inlet, so that it is easy to dispose the hollow reaction portions without interference between the adjacent hollow reaction portions. Claim 3 corresponds to this preferred mode.

The detection units are usually detection electrode units, and each of the detection electrode units at least has an active electrode and a counter electrode and may have another electrode such as a reference electrode and another means when so required. The active electrode and the counter electrode are disposed on a surface of the substrate.

Each of the detection units is connected to a lead wire for transmitting information obtained by detecting the reaction as electric signals. The other end of the lead wire is a lead terminal, and the lead terminal is disposed at a position where the sensor chip is connected to a measurement device (means for processing information from the sensor chip and displaying a result), and the electric signals are transmitted to the measurement device through the lead terminal.

The sensor chip of this invention has the substrate and the cover layer that are opposed to each other, i.e., that are disposed to face to each other, and the multiple measurement units are formed between the substrate and the cover layer. Therefore, the sensor chip has the multiple detection units, and the detection units are provided at least on the surface of the substrate and preferably on the cover layer, too, as described later in this specification.

The substrate is electrically insulating film, and examples of a material for the substrate include ceramics, glass, a paper, a biodegradable material (microbially produced polyester polylactate, etc., for example), and a plastic material such as polyethylene telephthalate, and an insulating resin such as polyethylene telephthalate may preferably be used.

The spacer layer sandwiched between the substrate and the cover layer may be formed of one layer or multiple layers and may be formed of a resist material layer having a function of increasing insulating property between the electrodes and physically protecting the electrodes and a tackiness agent layer or an adhesive agent layer having a function of attaching the layers to each other. One layer may serve as the resist material layer and the adhesive agent layer in some cases, and each of the resist material layer, the tackiness agent layer, and the adhesive agent layer may be formed of multiple layers in other cases.

A resist material functions as a spacer after formation of the sensor chip and, due to strong adhesion to the substrates, has a function of preventing a boundary surface between the substrate and the spacer layer from peeling in the case where a liquid reagent which is coated on the reaction portions permeates into the boundary surface.

Examples of the resist material include a urethane resin, an epoxy resin, a modified polyimide resin, an acryl resin, and the like. Examples for a tackiness agent for forming the tackiness agent layer include a rubber-based tackiness agent, an acryl-based tackiness agent, and a silicone-based tackiness agent. Examples of an adhesive agent for forming the adhesive agent layer include epoxy-based, vinyl acetate-based, silicone-based adhesive agents, and the like, and a heat curable resin such as an epoxy resin, a UV curable resin, and the like may be used.

The adhesive agent layer and the tackiness agent layer also serve as spacers after formation of the sensor chip, but, since the adhesive agent and the tackiness agent in general have a low young's modulus and are easily deformed, it is undesirable to increase a thickness thereof by a large scale from the view point of restriction of a volume of the reaction portions. The thickness may ordinarily preferably be as small as possible in the range of thickness enabling the function of adhering by both sides.

In the sensor chip of this invention, a sample is introduced into the multiple hollow reaction portions from the one sample inlet. The introduced sample causes a chemical reaction, and the reaction is detected for quantity determination and the like. In the case of a biosensor chip, a biochemical reaction is caused. Accordingly, a catalyst, an enzyme, or the like required for the chemical reaction is immobilized on the hollow reaction portions, and the chemical reaction of the sample is promoted by the catalyst, the enzyme, or the like.

Examples of the catalyst and the enzyme to be immobilized include glucose oxidase (GOD), glucose dehydrogenase (GDH), a glucose oxidase-electron receptor (mediator) mixture, a glucose oxidase-albumin mixture, a glucose oxidase-electron receptor-albumin mixture, and the like in the case of a glucose biosensor for measuring a glucose amount in blood.

The sensor chip of this invention is usable as a fructose sensor checkups for a hepatic function, checkups for neutral fat and a cholesterol amount, and the like in addition to the glucose biosensor. Fructose dehydrogenase (FDH) is immobilized in the fructose sensor. In the sensor chip to be used for hepatic function checkup, a glutamicoxaloacetic transaminase (GOT) (aspartate aminotransferase (AST)), a gultamicpyruvic transaminase (GPT) (alanine aminotransferase (ALT)) and a γ-gultar transpeptidase (γ-GTP) for measuring amounts of γ-guanosine 5'-triphosphate are immobilized.

Lipoprotein lipase for measuring a triglyceride amount in blood is immobilized in a sensor chip to be used for the neutral fat amount checkup, and cholesterol oxidase is immobilized in a sensor chip to be used for checking up the cholesterol amount in blood. In order to perform a smooth reaction, a surfactant or the like may be coated in some cases.

Also, one end of each of the hollow reaction portions is communicated with the sample inlet, and an opening may preferably be formed on the other end. By forming such straw-like structure of the hollow reaction portion, it is possible to facilitate charging of the sample to the reaction portion by using a capillary phenomenon.

Since the multiple hollow reaction portions are formed by using the one sample inlet in the sensor chip of this invention, it is possible to perform measurements of a multiple of different components simultaneously by coating different reagents on the hollow reaction portions. By positioning the hollow reaction portions and the detection units in the radial pattern, it is possible to perform the multiple measurements without increasing the size of the chip.

The multiple hollow reaction portions and the multiple detection units are provided in the sensor chip of this invention, and one of them may be used as a reference portion for judging an availability of the sensor chip. The reagent used for other hollow reaction portions and a reagent (reference reagent) reacting with the reagent are coated on the reference portion, so that it is possible to judge a state of deterioration of the reagent by a current value generated by a reaction between the reagent and the reagent. For example, when a reference portion using a reagent that is deteriorated most rapidly among reagents coated on the multiple hollow reaction portions, it is possible to judge feasibility of measurement using the reagent and availability of the sensor chip.

In order to provide such reference portion as well as to perform multiple types of measurements wherein the number of samples and/or the number of reagents are/is two or more, the number of each of the hollow reaction portions and the detection units may preferably be three or more.

Also, since the sensor chip of this invention enables to introduce a sample into each of the reaction portions almost simultaneously from the one sample inlet and is capable of simultaneously performing measurements of the components, a measurement time is similar to that of a measurement using a sensor chip for one component, and it is possible to perform the measurements rapidly and conveniently. Further, since the sample inlet portion is shared by the multiple of reaction portions, an amount of the sample is reduced.

Though the reaction portions share the sample inlet portion, since other portions of the reaction portions are perfectly partitioned, mass transfer among the reaction portions is prevented during measurement, and it is possible to perform a highly accurate measurement. Further, since it is possible to form the reaction portion by combining simple-shaped members as described later in this specification, productivity is high and production cost is low.

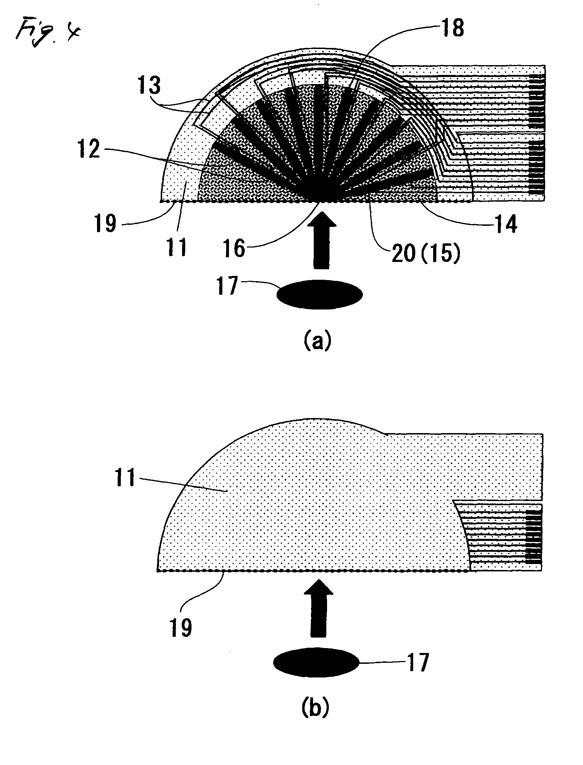

A position of the sample inlet may be on an outer rim portion of the sensor chip or may be on the substrate that is positioned inward from the outer rimportion of the sensor chip, or particularly on a central portion of the substrate. Shown in Fig. 4 is one example of the case of disposing the sample inlet on the outer rim portion of the sensor chip. Claim 4 corresponds to the sensor chip of this mode. In this case, since it is possible to directly introduce a sample such as a blood on the tip of a finger only by bringing the finger or the like close to the sample inlet without using other tools such as a pipetter, the sensor chip is suitably used as a blood sugar level sensor or the like for in-home health checkup.

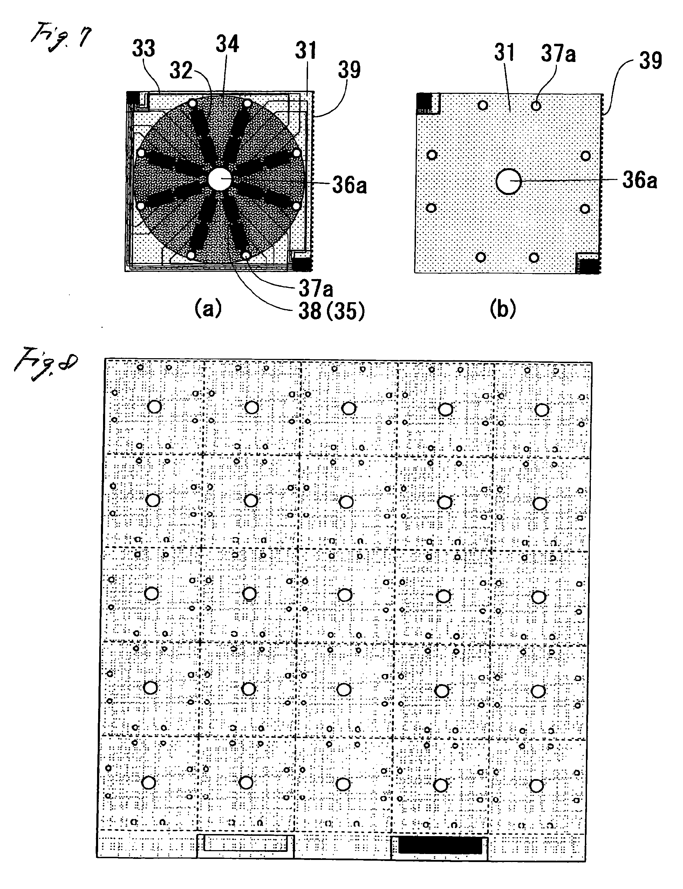

Shown in Fig. 7 is one example of the case of disposing the sample inlet on the central portion of the substrate. Claim 5 corresponds to the sensor chip of this mode. In this case, since it is possible to dispose the hollow reaction portions on an entire circumference of the sample inlet, it is possible to dispose an increased number of the hollow reaction portions, thereby enabling more types of measurements.

Further, as a result of an extensive research, the inventor found that it is possible to obtain a sensor chip that attains the above-described object by disposing, in a sensor chip having two substrates opposed to each other and a spacer layer sandwiched between the substrates, multiple measurement units including two or more hollow reaction portions that share one sample inlet opened between the substrates and on outer surfaces of the substrates.

More specifically, according to this invention, there is provided a sensor chip including two substrates opposed to each other, a spacer layer sandwiched between the substrates, and multiple measurement units disposed between the substrates and including two or more hollow reaction portions that share one sample inlet opened on outer surfaces of the substrates and detection electrode units respectively exposed in the hollow reaction portions (claim 6).

The sensor chip of this invention includes, between the substrates, multiple measurement units including two or more hollow reaction portions that share one sample inlet opened on outer surfaces of the substrates and detection electrode units respectively exposed in the hollow reaction portions. Each of the detection electrode units is an electrode unit at least having an active electrode and a counter electrode and may have another electrode such as a reference electrode and other means when so required. The detection electrode units are disposed on the surfaces of the substrates and connected to lead wires each guiding a current generated by a reaction of a sample to a detector provided externally from the chip.

Each of the two or more hollow reaction portions forming the measurement units is a hollow portion formed inside the spacer layer, and a sample is introduced into the hollow portion to cause a chemical reaction for detection and quantity determination or a biochemical reaction in the case of a biosensor chip. The detection electrode unit is exposed in each of the two or more hollow reaction portions, and the reaction is detected by the detection electrode unit.

In each of the hollow reaction portions, a reagent required for the chemical reaction, such as a catalyst, an enzyme, or the like, is immobilized, and the chemical reaction of the sample is promoted by the reagent.

In this invention, the two or more hollow reaction portions are shared the one sample inlet. That is, one ends of the two or more hollow reaction portions are connected to each other or is opened to an identical hole. An identical sample (measurement object substance) is introduced from the one sample inlet to the two or more hollow reaction portions. In the case where the reagents immobilized in the two or more hollow reaction portions are different from each other, it is possible to perform different measurements using the identical sample, such as measurements of different components.

The one sample inlet shared by the two or more hollow reaction portions is opened on the outer surfaces of the substrates. Therefore, the multiple sample inlets corresponding respectively to the multiple measurement units are disposed in such a fashion as to open on an outer surface of the sensor chip. As a result, it is possible to rapidly introduce a multiple of samples into the multiple sample inlets easily with the use of a pipette or the like. A pipette chip, a Pasteur pipette, a capillary pipette, and the like are used in general clinical checkups, and it is possible to easily and rapidly introduce the multiple of samples by using such pipettes.

It is necessary that each of the reaction portions has at least one sample inlet at one end thereof. Also, an opening (sample discharge portion) may preferably be formed on the end opposite to the sample inlet. By forming such straw-like structure of the hollow reaction portion, it is possible to facilitate introduction of the sample to the hollow reaction portion by using a capillary phenomenon.

The sensor chip of this invention has the multiple measurement units described above, and "multiplicity" means "two or more" in this specification. In the case of a larger number of measurement units, such as four or more measurement units, the effects of this invention are exhibited to a greater degree.

In the sensor chip of this invention, it is possible to introduce samples that vary from one multiple measurement unit to another from the sample inlets almost simultaneously to the reaction portions as well as to perform measurements simultaneously. Therefore, it is possible to rapidly and conveniently perform the measurements of the multiple samples.

Also, since the multiple measurement units are disposed independently from each other, the samples will never be mixed. Though a sample inlet portion is shared by the measurement units, other portions are perfectly partitioned in each of the measurement units. Therefore, mass transfer among the reaction portions does not occur during the measurements, thereby enabling highly accurate measurement.

Also, since it is possible to form the reaction portion by combining simple-shaped members, the sensor chip of this invention is high in productivity and low in production cost.

As a specific mode of the sensor chip of this invention, a sensor chip wherein hollow reaction portions are disposed in a triangle of which the apex is a sample inlet and two of the hollow reaction portions form two sides in each of the measurement units is preferred.

In such sensor chip, in the case where two of the two or more hollow reaction portions form the two sides of the triangle of which the apex is the sample inlet in each of the measurement units and the number of the hollow reaction portions is three or more, other hollow reaction portions are provided between the two sides.

In this case, the adjacent measurement units are disposed in such a fashion that aspects of the triangles formed by the measurement units are reverse to each other and that the sides of the adjacent triangles are substantially parallel to each other, so that a gap between the adjacent measurement units is reduced and a flat surface of the substrate sheet can be used effectively, thereby enabling to obtain a sensor chip further reduced in size.

As another specific mode of the sensor chip of this invention, a sensor chip having the following structure is also preferred. This invention also provides the following sensor chips corresponding to the preferred modes.

In the sensor chip described above, each of the measurement units has two hollow reaction portions, and the two hollow reaction portions are disposed to extend in directions reverse to each other from the sample inlet (claim 7).

That is, in the above-described mode, the two hollow reaction portions and the sample inlet are disposed along a substantially one straight line. In the case where the number of the hollow reaction portions is two, it is possible to dispose the two hollow reaction portions along a substantially one straight line, and it is possible to reduce a width of the sensor chip by such positioning, thereby enabling to obtain a sensor chip having a small size. Also, since it is easy to separate the measurement units from each other in the sensor chip, it is possible to obtain a multiple of the sensor chips with high productivity by the separation method.

In the sensor chip described above, the multiple measurement units are aligned along at least a direction of one straight line (claim 8).

When the multiple measurement units are aligned along one straight line, it is possible to dispose the multiple sample inlets along one straight line, thereby enabling to introduce a multiple of samples automatically by using a dispenser or the like. Particularly, this effect is enhanced in the sensor chip of the above-described specific mode.

In the sensor chip described above, there are further multiple measurement units disposed in a direction orthogonal to the direction of one straight line (claim 9).

The multiple measurement units are aligned in the direction of the one straight line and also in the direction orthogonal to the one straight line. Thus, it is possible to perform measurements of a larger number of samples. Also, by separating the measurement units by a group of the measurement units aligned in the one straight line after obtaining such sensor chip, it is possible to obtain multiple sensor chips in which the multiple measurement units are aligned in one direction. With such method, it is possible to improve production efficiency.

The sensor chip of this invention is suitably used as a biosensor chip or a biosensor device, a blood sugar level sensor, a urinary sugar level sensor, and the like for measuring a glucose amount (blood sugar level) in blood and as a fructose sensor, a hepatic function checkup, checkups for neutral fat and a cholesterol amount, and the like. Claim 10 corresponds to this preferred mode and provides the sensor chip which is a biosensor chip.

This invention further provides a production method of the sensor chip having the above-described excellent characteristics. With this production method, it is possible to produce the sensor chips easily and with high productivity.

That is, according to this invention, there is provided a method for producing a sensor chip including a substrate, a cover layer, a spacer layer sandwiched between the substrate and the cover layer, a multiplicity of hollow reaction portions disposed between the substrate and the cover layer, a multiplicity of detection units exposed in the hollow reaction portions, wherein a sample inlet is communicated with the hollow reaction portions, the method including: a step of forming the multiple detection units on the substrate, a step of forming the spacer layer having multiple grooves in which the detection units are respectively exposed and having one ends thereof disposed on a substantially identical position, and a lamination step for covering the spacer layer with the cover layer (claim 11).

In the production method of this invention, the detection units, i.e. the detection electrodes such as counter electrodes and active electrodes, are firstly formed at least on the substrate (preferably on the cover layer, too, as described later in this specification). The formation of detection units may be performed by employing a method of attaching a metallic tape on the substrate sheet, for example, or may be performed by employing screen printing for coating an electroconductive substance such as a carbon ink.

The multiple of detection units may preferably be disposed in a radial pattern, i.e. in such a fashion that the multiple of detection units extend in a radial pattern from the position at which the sample inlet is formed when the sensor chip formation is completed.

In the production method of this invention, the multiple of electrode units are formed on one surface of one substrate sheet, and it is possible to produce the multiple of electrode units simultaneously in one step when the screen printing or the like is employed. Therefore, this production method is favorable due to its increased productivity. The lead wires are formed simultaneously with the formation of detection units. The lead wire is also formed in one step by the screen printing or the like.

Next, the spacer layer having the grooves of which the number is identical to the number of the detection units is formed on the detection units. The grooves of the spacer layer are so formed that the detection units are exposed respectively in the grooves. Therefore, in the case where the detection units are formed to extend in a radial pattern, the grooves are also formed in such a fashion as to extend in a radial pattern from the position at which the sample inlet is formed when the sensor chip formation is completed.

The formation of spacer layer is performed by stacking the resist material, the tackiness agent layer, and the like. Formation of the resist material, the tackiness agent layer, and the like is performed by employing the screen printing, for example. More specifically, the resist material is coated in such a manner as to form grooves by the screen printing, and, after the resist material is cured, the tackiness agent layer or the adhesive agent layer is coated in such a manner as to form grooves on the grooves of the resist material by the screen printing. The method employing screen printing is high in productivity and most economical.

Preferably, an tackiness agent or an adhesive agent is used for lamination. That is, the tackiness agent layer or the adhesive agent layer may preferably be provided on the uppermost portion of the spacer layer.

This invention provides another production method described below as a more preferred mode of the above-described production method.

In the method described above, the substrate and the cover layer are formed from an identical material and have an identical thickness; the multiple detection units are formed in a radial pattern on the cover layer; the spacer layer having multiple grooves in which the detection units are respectively exposed and having one ends thereof disposed on a substantially identical position is formed; and the lamination step is performed in such a manner that the ends of the grooves of the spacer layer formed on the substrate and the cover layer are overlapped with one another while other portions of the grooves are not overlapped (claim 12).

In the sensor chip production method of this invention, the spacer layer having the multiple of detection units and the grooves may be formed on each of the substrate and the cover layer, so that the spacer layers are laminated as being opposed to each other. It is possible to form a larger number of the detection units and the grooves (i.e. hollow reaction portions) provided that the lamination is performed in such a manner as to avoid overlapping of the grooves of the substrate with the grooves of the cover layer, and such method is preferred. By adjusting the positions of the detection units and the grooves formed on the substrate and the cover layer to shift the positions after the lamination, it is possible to avoid the overlapping of the grooves. Also, by inserting a film that does not allow permeation of a reagent solution and a sample liquid between the spacer layers in the lamination step, it is possible to prevent the overlapping of the grooves. Note that a thickness of the sensor chip is increased in this case.

The spacer layer of the thus-obtained sensor chip is formed by combining the two spacer layers (in the case where the non-permeable film is sandwiched between the spacer layers, the spacer layer is formed by combining the two spacer layers and the film).

In the above-described production method, the substrate and the cover layer are formed from one substrate sheet, and the lamination step is performed by folding the substrate sheet at a folding line at which the substrate sheet is substantially bisected (claim 13).

The folding line is set at the position at which the substrate sheet is substantially bisected. One of the two parts sectioned by the folding line forms the substrate, and the other one forms the cover layer.

The substrate sheet is a sheet-like member to be used as the substrate and the cover layer after the production of sensor chip (the substrate and the cover layer are made from the identical material and have the identical thickness). Therefore, the material used for the above-described substrate may be used for the substrate sheet.

With this production method, it is possible to form the substrate, the cover layer, and both of the spacer layers on one surface of the substrate sheet, and it is possible to form both of the spacer layers simultaneously by a method such as screen printing, thereby improving productivity. Also, since it is possible to form all the grooves on one surface of one sheet, it is possible to form all the grooves with a reduced number of process steps by employing a method of coating a resin such as the resist material and the tackiness agent by screen printing or the like in such a manner as to form the grooves, thereby achieving a further improved productivity as compared to the case of forming the grooves separately. The same applies to the formation of detection units.

After the folding and the lamination, it is possible to perform cutting of the folded portion and annealing for the purpose of eliminating a residual stress at the folding portion.

In any of the above-described modes of the production method, it is possible to perform immobilization of the reagent such as the catalyst, the enzyme, or the like used for the reaction for the detection and quantity determination on the reaction portions when the sensor chip formation is completed, and, from the view points of ease of production, it is preferable to perform the immobilization before the formation of sensor chips, i.e. before the lamination step. The reagent is coated on at least one of the multiple grooves before folding at the folding line. Claim 14 corresponds to this preferred mode.

The reagent coating is not necessarily performed after the groove formation, and it is possible to coat the reagent before the groove formation at the positions where the grooves are to be formed. For example, it is possible to employ a method wherein: the reagent is coated on a portion that is on the substrate and is to be used as the reaction portion when the sensor chip formation is completed; the member (such as the resist material) for forming the spacer layer is attached around the portion or a resin is coated around the portion. However, since it is possible to easily define a reagent coating area and a reagent coating position after the groove formation, it is preferable to form the grooves in advance of the reagent coating from the view point of productivity.

The sensor chip of this invention wherein multiple structures each having the sample inlet at a central portion of the substrate are disposed on one flat surface may be used as a sensor device, and it is possible to produce such sensor device in the same manner as in the above-described methods. According to this sensor device, since it is possible to have a multiple of sample inlets each having the multiple reaction portions, it is possible to perform multiple measurements of multiple samples easily and rapidly.

A sensor chip of this invention is obtainable by a method for producing a sensor chip including two opposed substrates, a spacer layer sandwiched between the substrates, and multiple measurement unit including two or more hollow reaction portions sharing one sample inlet opened on outer surfaces of the substrates and detection electrode units respectively exposed in the hollow reaction portions, the method including: a step of forming the multiple detection electrode units on each of two parts that are sectioned by a folding line at which the substrate sheet is substantially bisected; a step of covering the detection electrode units with a member forming the spacer layer and forming the multiple grooves in which the detection electrode units are respectively exposed in such a manner that one ends of the grooves are shared by the grooves or that one ends of the grooves are disposed line-symmetrically about a central axis which is the folding line; and a step of folding the member to laminate surfaces of one part of the member and the other part of the member by the folding (claim 15). This invention provides the sensor chip as well as the sensor chip production method.

As used herein, the substrate sheet is a sheet-like member serving as the two substrates when the sensor chip is formed. Therefore, a material used for the above-described substrate may be used as the material for the substrate sheet. The folding line is ordinarily set at the position where the substrate sheet is substantially bisected. One of two parts sectioned by the folding line of the substrate sheet forms one of the two substrates, and the other part forms the other substrate.

In the production method of this invention, the detection electrode units are formed on each of the two parts sectioned by the folding line of the substrate sheet. The formation of detection electrode units may be performed by employing a method of attaching a metallic tape on the substrate sheet or by screen printing for coating an electroconductive substance such as a carbon ink. Since the detection electrode units of both of the substrates are formed on one surface of one substrate sheet in the production method of this invention, it is possible to form the detection electrode units for the two substrates in one step when the screen printing or the like is employed, thereby improving the productivity.

The formation of the multiple detection electrode units may preferably be performed in such a manner that positions of the detection electrode units that are close to the folding line on one of the two parts sectioned by the folding line are different from positions of the detection electrode units that are close to the folding line on the other part, i.e., in such a manner that the detection electrodes formed on one side do not have portions overlapped with the detection electrodes formed on the other side. Claim 16 corresponds to this preferred mode.

As described later in this specification, the grooves that serve as hollow reaction portions will be formed on the detection electrode units after the folding, and, in the case where the detection electrode units are formed in such a manner that the positions close to the folding line such as the line-symmetrical positions about the folding line on one side are aligned with those on the other side, the grooves to be formed on the detection electrode units are overlapped with each other. Accordingly, in order to form the hollow reaction portions that are separated from each other from such grooves, it is necessary to employ a method of performing the folding by inserting a sheet for separating the grooves from each other or the like. However, in the case where the two detection electrode units are formed in such a manner that the positions close to the folding line are varied from each other, such sheet in not required, and it is possible to facilitate production of sensor chips as well as to reduce a thickness of the sensor chip.

Next, the cover layer is formed in such a fashion as to cover each of the detection electrode units formed on the parts sectioned by the folding line. The formation of cover layer is performed by stacking a resist material, a tackiness agent layer, or the like. It is possible to form the resist material and the tackiness agent layer by screen printing. Since the cover layer for both parts of the substrate is formed on one surface of one substrate sheet in the production method of this invention, it is possible to form the cover layers for the substrates simultaneously by the screen printing or the like, thereby improving the productivity. The formation of cover layer may be performed by a method of coating and curing the resist material by screen printing and then coating the tackiness agent layer or the adhesive agent layer by screen printing.

The grooves that serve as the reaction portions when the sensor chip formation is completed are formed on the cover layer. Therefore, the formation of grooves is performed in such a manner as to expose the detection electrode units respectively in the grooves. The formation of grooves may be performed simultaneously with the formation of cover layer.

In the production method of this invention, all the grooves are formed on one surface of one substrate sheet. Therefore, it is possible to form all the grooves in a reduced number of process steps by a method wherein a tape having a tackiness layer is laminated on the substrate sheet on which the electrode units are formed and then another tape is stacked to form grooves, a method wherein a resin such as a resist material and a tackiness agent is coated by screen printing in such a manner as to form grooves, or the like, thereby achieving a considerably improved productivity as compared to the case of forming the grooves separately. Particularly, the method employing screen printing is high in productivity and most economical.

Also, the formation of grooves is performed in such a manner that one ends of the grooves are shared by the grooves or one ends of the grooves are positioned line-symmetrically about the folding line. That is, in the case where two or more grooves are formed on one side sectioned by the folding line, one ends of the grooves are shared by the grooves, and a sample inlet is formed on the shared end to use the sample inlet as a sample inlet shared by two or more hollow reaction portions.

Also, in the case where the grooves are formed on each sides sectioned by the folding line, one ends of the grooves are positioned line-symmetrically about the folding line. With such arrangement, the end of the groove formed on one side is overlapped with the end of the groove formed on the other side when the folding at the folding line is conducted. Then, a sample inlet is formed on the overlapped portion to use the sample inlet as a sample inlet shared by two or more hollow reaction portions.

The formation of sample inlet may be performed by a method wherein a hole is formed at the position of one ends of the grooves that will be overlapped when the folding is conducted and then forming the cover layer in such a manner as to have a hole at the position of one ends of the grooves or a method wherein a hole is formed at a position of the overlapped ends of the grooves after the folding is conducted.

After forming the grooves as described above, the stacked body of the substrate sheet and the cover layer is folded at the folding line so that surfaces of the cover layers are laminated. Preferably, a tackiness agent or an adhesive agent is used for the lamination. That is, a tackiness agent layer or an adhesive agent layer may preferably be provided on the uppermost portion of the cover layer.

Though it is possible to immobilize a reagent such as a catalyst and an enzyme for causing a reaction for detection and quantity determination on the reaction portions when the sensor chip formation is completed, the reagent immobilization may preferably be performed, i.e. before the folding, from the view point of ease of production. Generally, the reagent is coated on at least one of the multiple grooves before folding at the folding line. Claim 17 corresponds to this preferred mode.

The reagent coating is not necessarily performed after the groove formation, and the reagent may be coated on positions at which the grooves are to be formed. For example, it is possible to employ a method wherein the reagent is coated on the portions on the substrate that serve as the reaction portions when the sensor chip formation is completed and then a member (such as the resist material) forming one of the cover layers is attached around the portions or a resin is coated around the portions. However, since it is possible to easily define the reagent coating area and the reagent coating position when the grooves are formed in advance, the grooves may preferably be formed before the reagent coating from the view point of productivity.

The reagent coating on the grooves may be performed by using a coating machine or the like, and, in the sensor chip production method of this invention, it is possible to coat the reagent on two or more grooves in one step by using an coating machine such as a dispenser since all coating surfaces are on one flat surface. When the two or more grooves are parallel to each other, it is possible to perform the coating on the two or more grooves in a time identical to that of the case of coating the reagent on one groove by providing one coating machine with two or more nozzles of which a nozzle interval is fixed and then moving either one of the coating machine or the substrate sheet on which the grooves are formed. As a result, the productivity is preferably enhanced.

### Effect of the Invention

The sensor chip of this invention enables to perform measurements and quantity determinations of multiple components in a small amount of a sample simultaneously and with a simple operation and enables highly accurate measurements since mass transfer among the reaction portions is prevented. That is, it is possible to determine quantities of the multiple components in the trace amount of sample correctly, rapidly, and conveniently. Also, since none of the component members has a complicated shape, production of the sensor chip is easy, and the sensor chip is suitably used as a biosensor chip.

Further, according to the production method of this invention, it is possible to produce the sensor chip having the above-described characteristics easily and with high productivity. Particularly, according to the method wherein the substrate is folded after the detection units of the substrate, the cover layer, and the spacer layer are formed on one surface of one substrate sheet, it is possible to further improve the productivity by using screen printing or the like.

The sensor chip of this invention is capable of performing two types of measurements of each of a multiplicity of samples. Since it is unnecessary to increase the size of the sensor chip, and since none of the component members of the sensor chip has a complicated shape, the sensor chip is easily produced. Also, since the mass transfer between the reaction portions does not occur, it is possible to perform highly accurate measurements as well as to perform the measurements of the components simultaneously, thereby reducing a measurement time. Thus, the sensor chip is capable of determining quantities of two components of each of a multiple of types of small-amount samples correctly, rapidly, and conveniently and suitably used as a biosensor chip.

Also, in the sensor chip of this invention, the sample inlets corresponding to the respective multiple measurement units are spread and disposed on an outer surface (outer surface of the substrate) of the sensor chip, it is possible to introduce a multiple of samples into the inlet easily and rapidly. Particlarly, in the case where the sample inlets are disposed along one straight line, it is possible to efficiently introduce the samples by using an automatic dispenser or the like. Therefore, the sensor chip is suitably used for measurements of a multiple of items and processing a multiple of test substances, i.e. as a DNA chip, for example.

Further, since the detection electrode units of the substrates and the cover layer forming the spacer layer are formed on one surface of one substrate sheet in the production method of this invention, it is possible to produce the detection electrode units and the like in a reduced number of process steps, thereby further improving the productivity.

### Brief Description of the Drawings

[Fig. 1]

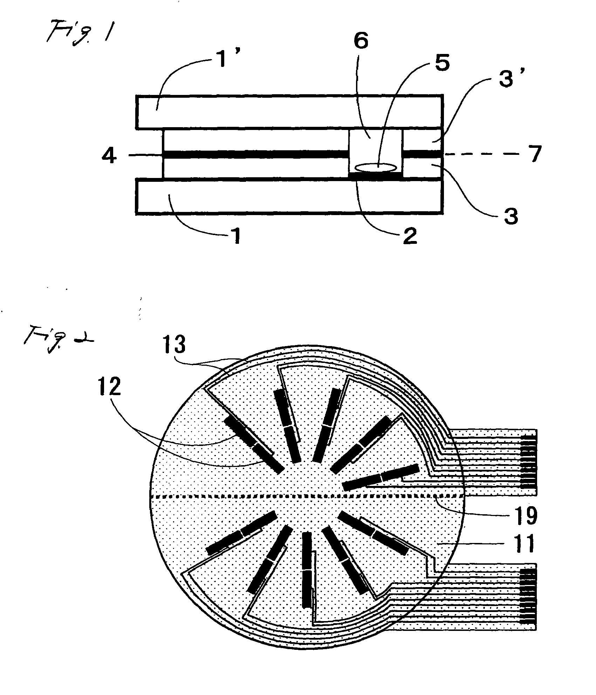

   Fig. 1 is a sectional view showing one measurement unit in a sensor chip of this invention.
[Fig. 2]
   Fig. 2 is a diagram for illustrating one process step of a sensor chip production method of this invention.
[Fig. 3]

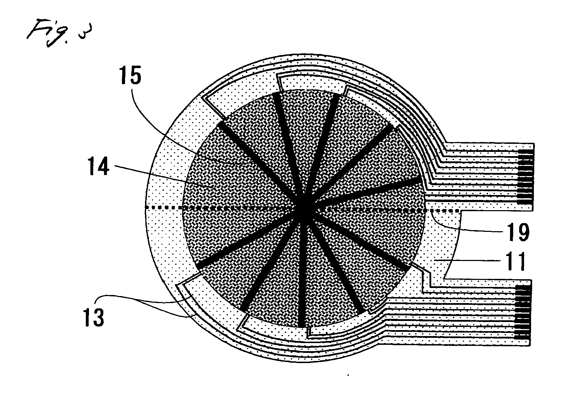

   Fig. 3 is a diagram for illustrating one process step of a sensor chip production method of this invention.
[Fig. 4]
   Fig. 4 is a diagram for illustrating one process step of a sensor chip production method of this invention.
[Fig. 5]

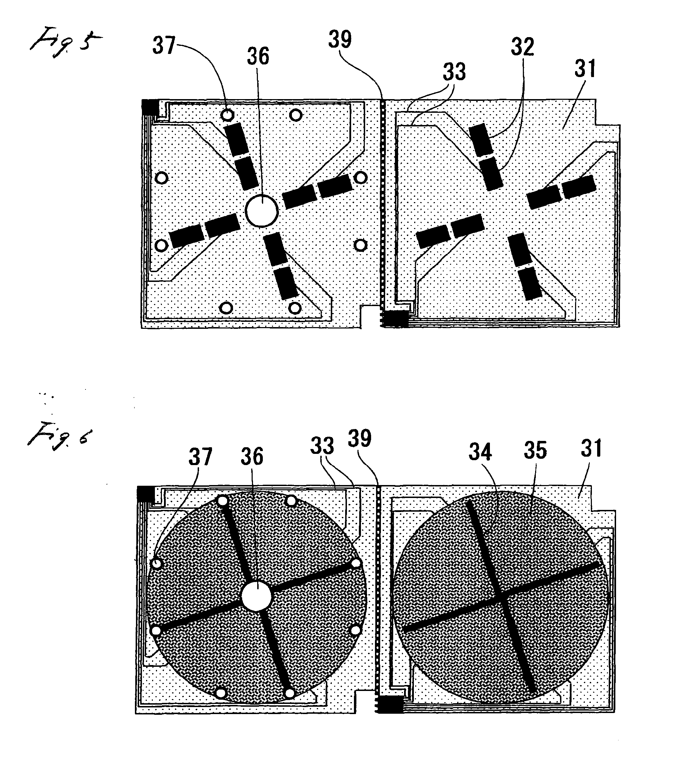

   Fig. 5 is a diagram for illustrating one process step of a sensor chip production method of this invention.
[Fig. 6]
   Fig. 6 is a diagram for illustrating one process step of a sensor chip production method of this invention.
[Fig. 7]
   Fig. 7 is a diagram for illustrating one process step of a sensor chip production method of this invention.
[Fig. 8]
   Fig. 8 is a diagram for illustrating a sensor device in which a multiple of the sensor chips of this invention are aligned.
[Fig. 9]

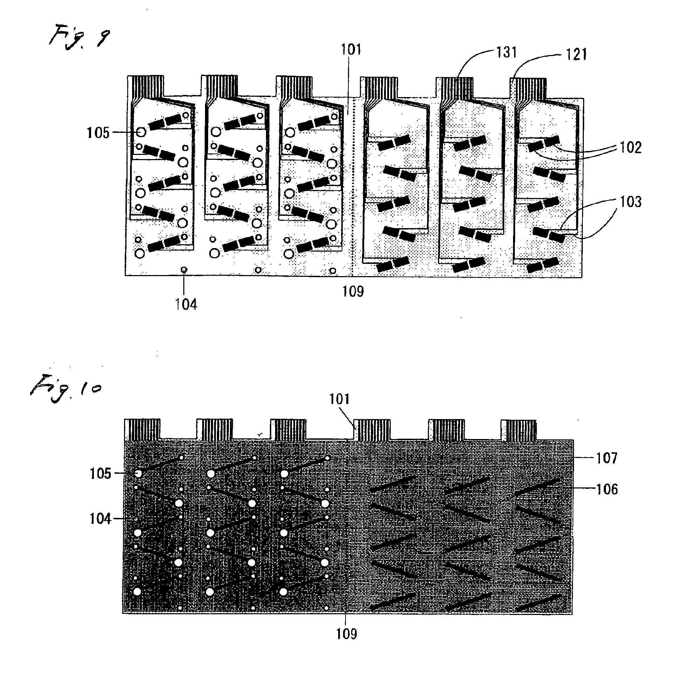

   Fig. 9 is a plan view showing one example of production process of the sensor chip of this invention.
[Fig. 10]
   Fig. 10 is a plan view showing one example of production process of the sensor chip of this invention.
[Fig. 11]

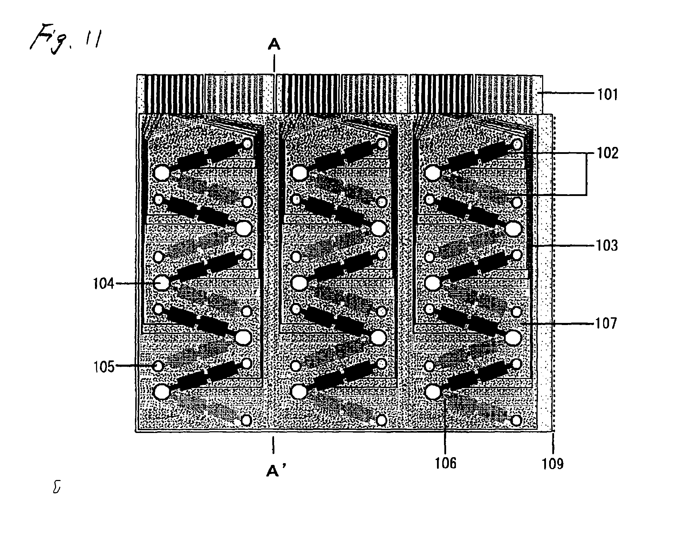

   Fig. 11 is a perspective view showing one example of sensor chip of this invention.
[Fig. 12]

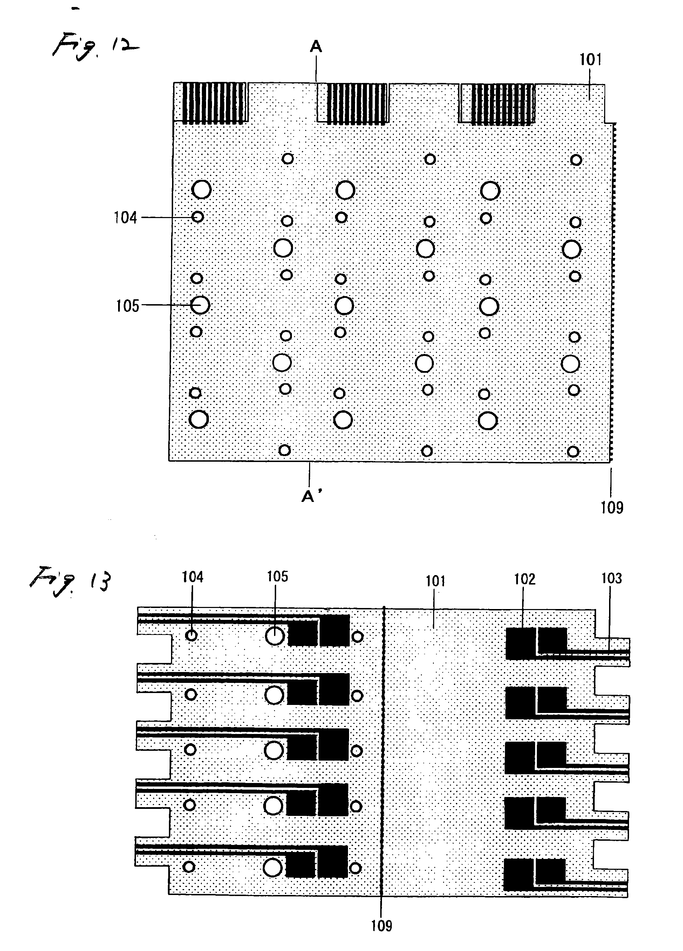

   Fig. 12 is a plan view showing one example of sensor chip of this invention.
[Fig. 13]
   Fig. 13 is a plan view showing another example of production process of the sensor chip of this invention.
[Fig. 14]

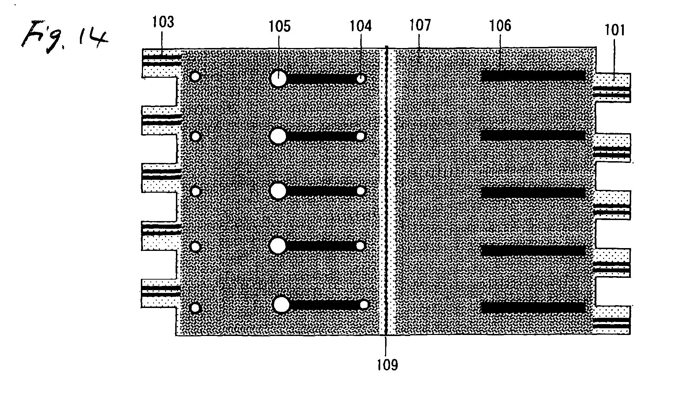

   Fig. 14 is a plan view showing another example of production process of the sensor chip of this invention.
[Fig. 15]

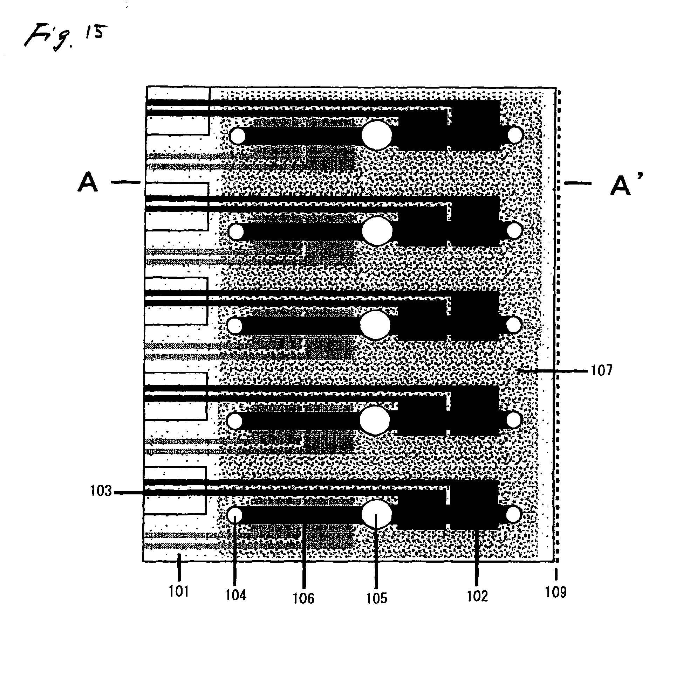

   Fig. 15 is a perspective view showing another example of sensor chip of this invention.
[Fig. 16]

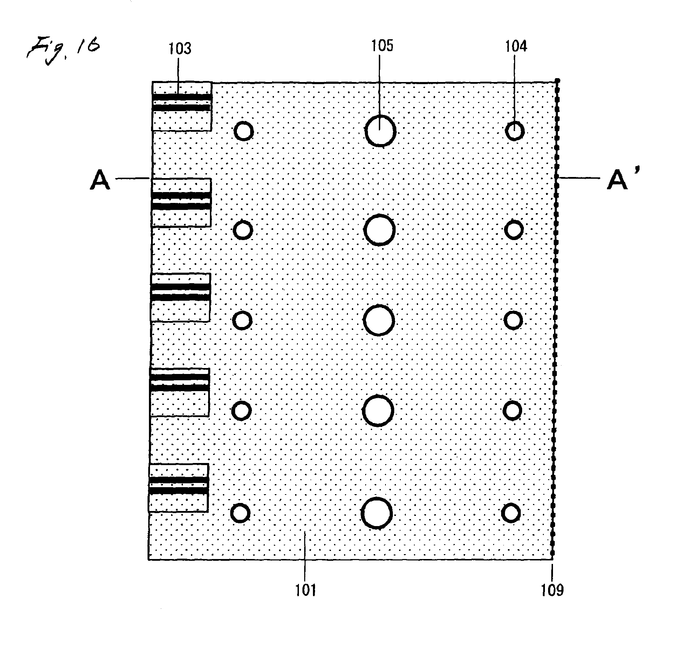

   Fig. 16 is a plan view showing another example of sensor chip of this invention.

### Description of Reference Numerals and Signs

1: substrate
1': cover layer
11, 31: substrate sheet
2, 12, 32: detection electrode unit
3, 3', 14, 35: resist material layer
13, 33: lead wire
15, 34: groove
19, 39: folding line
101: substrate sheet
102: detection electrode unit
103: lead wire portion
104: sample discharge portion
105: sample inlet
106: hollow reaction portion (groove)
107: resist material layer
109: folding line

### Best Mode for Carrying out the Invention

Hereinafter, the best mode for carrying out this invention will be described by using the drawings. This invention is not limited to the modes, and it is possible to modify the modes to other modes insofar as the subject matter of this invention is not undermined.

Fig. 1 is a diagram schematically showing a section of one of portions (measurement units) each formed of detection electrode units disposed in a radial pattern and hollow reaction portions of a sensor chip obtained by this invention.

As shown in Fig. 1, resist material layers 3 and 3' are sandwiched between a substrate 1 and a cover layer 1'. A detection electrode unit 2 is formed on a surface facing to the resist material layer 3 of the substrate 1. The substrate 1, the cover layer 1', and the resist material layers 3 and 3' are laminated with each other at a central line 7 via a tackiness agent layer 4 (the spacer layer is formed of a stack of the resist material layer and the tackiness agent layer).

A reaction portion 6 is formed in the resist material layer 3. The reaction portion 6 is formed in the resist material layers 3 and 3' and the tackiness agent layer 4, and the detection electrode unit 2 is exposed in the reaction portion 6. The reaction portion 6 has a straw-like shape of which both ends are opened, and one end thereof is used as a sample inlet (16 in Fig. 4) from which a sample in introduced. A reagent 5 is immobilized on a bottom side of the reaction portion 6.

The sensor chip of this invention is obtainable by disposing a multiplicity of the measurement units shown in Fig. 1 in a radial pattern from one sample inlet. Hereinafter, a sensor chip production method of this invention will be described.

Figs. 2 to 4 are diagrams illustrating a production process in one example of production method of this invention. In the sensor chip produced by the example, the sample inlet is formed on an outer rim portion of the sensor chip (mode of claim 4).

Referring to Fig. 2, multiple detection electrode units 12 and lead wire portions (including terminal portions) 13 are formed on the substrate sheet 11 in a radial pattern from the center of the circle. The sample inlet (16 of Fig. 4) is formed at a central portion of the circle. An upper portion of a folding line 19 of the substrate sheet 11 serves as the substrate 1 when the sensor chip formation is completed, and a lower portion serves as the cover layer 1' when the sensor chip formation is completed.

As the substrate sheet 11, a foldable and electrically insulating film such as a PET film is used, and a carbon ink is printed on the PET film by screen printing to form the detection electrode units 12 and the lead wire portions 13. In this example, each of the detection electrode units 12 is formed of a pair of electrodes including a counter electrode and an active electrode, and an electrode such as a reference electrode and a liquid detection electrode, which can be formed by screen printing in the same manner as described above, may be disposed in addition to the detection electrode units.

The detection electrode unit 12 and the lead wire portion 13 are disposed at least one of the upper and the lower portions of the substrate sheet 11. In the case of disposing the detection electrode unit 12 and the lead wire portion 13 on each of portions, the detection electrode unit 12 and the lead wire portion 13 on the upper portion and the detection electrode unit 12 and the lead wire portion 13 on the lower portion are disposed at positions asymmetrical to each other, i.e. at positions that are not overlapped by the folding. Also, the number of each of the detection electrodes 12 and the lead wire portions 13 is five in each of the upper and the lower portions in Figs. 2 to 4, the numbers of the detection electrodes 12 and the lead wire portions 13 of the upper portion may be varied from those of the lower portion.

After the formation of the detection electrode units 12, the resist material layer 14 is formed on the detection electrode units 12. Fig. 3 is a diagram showing a state after the formation of the resist material layer 14. As is apparent from Fig. 3, the resist material layer 14 has grooves 15 extending radially from the center of the circle, and the detection electrode units 12 are exposed in the grooves 15. Such resist material layer 14 is formed by a method of screen-printing and curing a resin forming the resist material layer 14 in such a manner as to form the grooves 15.

After the formation of the resist material layer 14, a tackiness agent layer (not shown since it is overlapped with the resist material layer) is formed on the resist material layer 14. The tackiness agent layer is formed by a method of screen-printing and curing a resin forming the tackiness agent layer in such a manner as to form the grooves.

After the grooves are formed as described above, a reagent (not shown) is coated on a bottom of each of the grooves. After the reagent coating, the substrate sheet is folded at the folding line 19 to laminate the tackiness layer of the upper portion with the tackiness layer of the lower portion. As a result, a sensor chip shown in Figs. 4 (a) and 4 (b) is obtained. Fig. 4(a) is a perspective view showing an inner portion of the sensor chip sandwiched between the substrate sheets 11, and Fig. 4(b) is a diagram showing an outer surface of the sensor chip.

As shown in Figs. 4(a) and 4(b), this sensor chip has a semi-circular shape, and the sample inlet 16 is disposed at a mid point of a segment (diameter) of the semi-circle. The sensor chip has a spacer layer formed of the two-layered resist material layer 14 and the two-layered tackiness agent layer. Further, reaction portions 20 extending radially from the sample inlet 16 to sample outlets 18 are formed. It is possible to introduce a sample such as a blood by bringing a tip of a finger 17 or the like into contact with the sample inlet 16.

Though the circular sheet is used as the substrate sheet in Figs. 2 to 4, the shape is not limited to the circular shape, and any shape that is integrated when laminated may be used. Also, the position of the lead terminal portion is not limited to that of this example.

Figs. 5 to 7 are diagrams showing production process steps in one example of production method of this invention. In a sensor chip produced by this example, a sample inlet is disposed at a central portion of a substrate (mode of claim 5).

As shown in Fig. 5, on each of surfaces of parts sectioned by a folding line 39 that substantially bisects a square substrate sheet 31, four detection electrode units 32 and four lead wire portions 33 are formed by screen printing in such a manner as to extend radially from a center of a square that is obtained by the folding. A through hole 36 and a through hole 37 are formed at a central portion of the square of one of the parts obtained by the folding and tips of the detection electrode units 32 of the other part, and the through holes 36 and 37 serve as a sample inlet 36a and a sample outlet 37a. Materials and formation methods of the substrate sheet, the detection electrode unit, and the like are the same as those described in the example of Figs. 2 to 4.

After that, in the same manner as in the case of Fig. 3, a resist material layer 35 having grooves 34 in which the detection electrode unit 32 are to be exposed is formed (Fig. 6). Further, in the same manner as in the case of Fig. 3, the substrate sheet 31 is folded at the folding line 39 after tackiness agent layer formation and reagent coating to laminate the tackiness layer of one of the parts with the tackiness layer of the other part. As a result a sensor chip shown in Figs. 7(a) and 7(b) is obtained.

Fig. 7(a) is a perspective view showing an inner portion of the sensor chip sandwiched between the substrate sheets 31, and Fig. 7(b) is a diagram showing an outer surface of the sensor chip.

As shown in Figs. 7(a) and 7(b), this sensor chip has the square shape and has the sample inlet 36a at its central portion. Also, the sensor chip has a spacer layer formed of the two-layered resist material layer 35 and the two-layered tackiness agent later. Further, reaction portions 38 extending radially from the sample inlet 36a to the sample outlets 37a are formed. It is possible to introduce a sample such as a blood by bringing a tip of a finger or the like into contact with the sample inlet 36a.

Since the thus-obtained sensor chip has the square shape, it is possible to dispose a multiple of the sensor chips vertically and horizontally on one flat surface without defining useless gaps. Shown in Fig. 8 is one example such arrangement, and 25 sensor chips (five sensor chips in each row and five sensor chips in each column).

Hereinafter, another mode for carrying out this invention will be described.

Figs. 9 to 12 are diagrams for illustrating production process steps for producing one example of sensor chip of this invention. Fig. 11 is a perspective view showing a sensor chip inner portion inside two substrates, and, as is apparent from the drawing, hollow reaction portions 106 are disposed in such a fashion as to form two sides sharing an apex of a triangle wherein the apex is a sample inlet 105 to form a measurement unit. Also, aspects of the triangles of the adjacent measurement units are reverse to each other and the adjacent sides (hollow reaction portions) of the adjacent measurement units are substantially parallel to each other (for example, positional relationship between 106 and 106' in Fig. 11), and the multiple measurement units are aligned along a direction one straight line (in a direction of an arrow C in Fig. 11) as well as along a direction (in a direction of an arrow D in Fig 11) orthogonal to the one straight line.

Multiple detection electrode units 102 and lead wire portions 103 are firstly formed on a substrate sheet 101 by screen-printing a carbon ink. Fig. 9 is a plan view showing a state after the formation of the detection electrode units 102 and the lead wire portions 103. On the substrate sheet 101 (one part of parts sanctioned by a folding line 109), holes to be used as sample inlets 105 and holes to be used as sample discharge portions 104 are formed.

As the substrate sheet 101, a foldable and electrically insulating film such as a PET film is used, and each of the detection electrode units 102 in this example is formed of an electrode formed of a counter electrode and an active electrode. An electrode such as a reference electrode and a liquid detection electrode, which can be formed by screen printing in the same manner as described above, may be disposed in addition to the detection electrode unit.

The reference numeral 109 in the drawings denotes the folding line that substantially bisects the substrate sheet 101, and the detection electrode unit 2 formed on one part of the parts sectioned by the folding line 109 is disposed at a position that is not line-symmetrical with the detection electrode unit formed on the other part about the folding line 109 (so that any portions thereof are not overlapped with each other when the substrate sheet is folded).

After the formation of detection electrode units 102 and the lead wire portions 103, a resist material layer 7 is formed on the detection electrode units 102 and the lead wire portions 103. Fig. 10 is a plan view showing a state after the formation of the resist material layer 107. It is possible to form the resist material layer 107 by screen-printing and curing a resin forming the resist material layer 107 in such a manner as to form grooves 106.

The substrate sheet 101 has projections 121, and ends 131 of the lead wire portions 103 are formed on the projections 121. The resist material layer 107 is not formed on the projections 121, so that the ends 131 of the lead wire portions 103 are exposed. Also, the screen printing for forming the resist material layer 107 is performed in such a manner as to form holes to be used as sample inlets 105 and holes to be used as sample discharge portions 104 are formed on the resist material layer 107 (on one part of the parts sectioned by the folding line 109).

After the formation of the resist material layer 107, a tackiness agent layer (not shown since it is overlapped with the resist material layer) is formed on the resist material layer 107. The tackiness agent layer is formed by a method of screen-printing and curing a resin forming the tackiness agent layer in such a manner as to form the grooves, the holes to be used as the sample inlets 105, and the holes to be used as the sample discharge portions 104.

After the grooves are formed as described above, a reagent (not shown) is coated on a bottom of each of the grooves. After the reagent coating, the substrate sheet 101 is folded at the folding line 109 to laminate the tackiness layer of one part with the tackiness layer of the other part. As a result, a sensor chip shown in Figs. 11 and 12 is obtained.

Since the grooves 106 are formed in such a manner that one ends of two grooves (for example 161 and 162 in Fig. 10) are positioned line-symmetrically about the folding line 109, and since the sample inlet 105 is formed at the position of one ends, two hollow reaction portions that share one sample inlet 105 are formed as shown in Fig. 11 by the lamination. As shown in Fig. 11, the detection electrode unit 102 formed on an upper portion (in the drawing) of the resist material layer 107 is exposed in one of the hollow reaction portions, and the detection electrode unit 102 formed on a lower portion (in the drawing) of the resist material layer 107 is exposed in the other hollow reaction portion.

Fig. 12 is a plan view showing a sensor chip. An outer surface of the sensor chip is covered with two substrates that are formed from a substrate sheet 1, and a multiple of sample inlets 105 and a multiple of sample discharge portions 104 are disposed on one of the substrates, so that different samples are introduced into the sample inlets 105 to simultaneously perform two types of measurements for each of the samples.

Ends 131 of lead wire portions 103 are exposed without being covered with the substrates formed from the substrate sheet 101, and the exposed ends 131 are connected to terminals of a detector when the sensor chip is placed in the detector. By separating the sensor chips at a line A-A' of Figs. 11 and 12, it is possible to obtain a multiple of sensor chips in each of which the measurement units are aligned along one direction. With this method, it is possible to produce the sensor chips in each of which the measurement units are aligned along one direction with high productivity.

Also, Figs. 12 to 16 are diagrams for illustrating production process steps for producing another example of sensor chip of this invention. Fig. 15 is a perspective view and showing an internal portion of the sensor chip inside two substrates, and, as is apparent from Fig. 15, hollow reaction portions 106 extend from the sample inlet 105 in reverse directions to form one measurement unit.

Since the production method of this sensor chip is the same as that of the sensor chip of Figs. 9 to 12 except for the formation positions of the grooves 106, the detection electrode unit 102, and the like, detailed detection is omitted. More specifically, Fig. 13 corresponds to Fig. 9; Fig. 14 corresponds to Fig. 10; Fig. 15 corresponds to Fig. 11; and Fig. 16 corresponds to Fig. 12.

Also, Fig. 8 is a plan view showing another example of sensor chip of this invention. In this sensor chip, multiple measurement units are aligned in a direction of one straight line and in a direction orthogonal to the one straight line. The number of the measurement units is 25 (five sensor chips in each row and five sensor chips in each column). Each of the measurement units has a sample inlet at its central portion, and hollow reaction portions extend radially from the sample inlet to sample discharge portions.

Though this invention is described in detail with reference to specific embodiments, it is apparent for person skilled in the art that it is possible to add various alternations and modifications insofar as the alternations and modifications do not depart from the spirit and scope of this invention. This patent application is based on Japanese patent application filed on October 17, 2005 (patent application number: 2005-301307) and Japanese patent application filed on October 26, 2005 (patent application number: 2005-311131), and contents thereof are incorporated herein by reference.

## Claims

1. A sensor chip comprising:
a substrate,
a cover layer,
a spacer layer sandwiched between the substrate and the cover layer,
multiple hollow reaction portions disposed between the substrate and the cover layer,
multiple detection units exposed in the hollow reaction portions, wherein
a sample inlet is communicated with the hollow reaction portions.

2. The sensor chip according to claim 1, wherein
the substrate and the cover layer are formed from an identical material and have an identical thickness.

3. The sensor chip according to claim 1 or 2, wherein
the multiple hollow reaction portions are disposed to extend radially from the sample inlet.

4. The sensor chip according to any one of claims 1 to 3, wherein
the sample inlet is disposed on an outer rim portion of the sensor chip.

5. The sensor chip according to any one of claims 1 to 3, wherein
the sample inlet is disposed on a central portion of the substrate.

6. A sensor chip comprising:
two substrates opposed to each other,
a spacer layer sandwiched between the substrates, and
multiple measurement units disposed between the substrates, and including two or more hollow reaction portions that share one sample inlet opened on outer surfaces of the substrates and detection electrode units respectively exposed in the hollow reaction portions.

7. The sensor chip according to claim 6, wherein
each of the measurement units has two hollow reaction portions, and
the two hollow reaction portions are disposed to extend in directions reverse to each other from the sample inlet.

8. The sensor chip according to claim 6 or 7, wherein
the multiple measurement units are aligned along at least a direction of one straight line.

9. The sensor chip according to claim 8, further comprising:
multiple measurement units disposed in a direction orthogonal to the direction of one straight line.

10. The sensor chip according to any one of claims 1 to 9, which is a biosensor chip.

11. A method for producing a sensor chip including a substrate, a cover layer, a spacer layer sandwiched between the substrate and the cover layer, a multiplicity of hollow reaction portions disposed between the substrate and the cover layer, a multiplicity of detection units exposed in the hollow reaction portions, wherein a sample inlet is communicated with the hollow reaction portions,
the method comprising:
a step of forming the multiple detection units on the substrate,
a step of forming the spacer layer having multiple grooves in which the detection units are respectively exposed and having one ends thereof disposed on a substantially identical position, and
a lamination step for covering the spacer layer with the cover layer.

12. The sensor chip production method according to claim 11, wherein
the substrate and the cover layer are formed from an identical material and have an identical thickness;
the multiple detection units are formed in a radial pattern on the cover layer;
the spacer layer having multiple grooves in which the detection units are respectively exposed and having one ends thereof disposed on a substantially identical position is formed; and
the lamination step is performed in such a manner that the ends of the grooves of the spacer layer formed on the substrate and the cover layer are overlapped with one another while other portions of the grooves are not overlapped.

13. The sensor chip production method according to claim 12, wherein
the substrate and the cover layer are formed from one substrate sheet, and
the lamination step is performed by folding the substrate sheet at a folding line at which the substrate sheet is substantially bisected.

14. The sensor chip production method according to any one of claims 11 to 13, wherein
a reagent is coated on the groove before the lamination step.

15. A method for producing a sensor chip including two opposed substrates, a spacer layer sandwiched between the substrates, and multiple measurement unit including two or more hollow reaction portions sharing one sample inlet opened on outer surfaces of the substrates and detection electrode units respectively exposed in the hollow reaction portions,
the method comprising:
a step of forming the multiple detection electrode units on each of two parts that are sectioned by a folding line at which the substrate sheet is substantially bisected;
a step of covering the detection electrode units with a member forming the spacer layer and forming the multiple grooves in which the detection electrode units are respectively exposed in such a manner that one ends of the grooves are shared by the grooves or that one ends of the grooves are disposed line-symmetrically about a central axis which is the folding line; and
a step of folding the member to laminate surfaces of one part of the member and the other part of the member by the folding.

16. The sensor chip production method according to claim 15, wherein
the formation of the multiple detection electrode units are performed in such a manner that positions of the detection electrode units that are close to the folding line on one of the two parts sectioned by the folding line are different from positions of the detection electrode units that are close to the folding line on the other part.

17. The sensor chip production method according to claim 15 or 16, wherein
a reagent is coated on at least one of the grooves before the folding at the folding line.
